# EUROPÄISCHE PATENTSCHRIFT

(11) **EP 1 471 287 B1**
(45) Veröffentlichungstag und Bekanntmachung des Hinweises auf die Patenterteilung: **03.11.2010**
(21) Anmeldenummer: 04008653.0
(22) Anmeldetag: 08.04.2004
(51) Int. Cl.: F16H 25/22

(54) **Kugelumlaufspindel**
Ball screw
Vis à billes

(30) Priorität: 23.04.2003 DE 10318388
(43) Veröffentlichungstag der Anmeldung: 27.10.2004
(73) Patentinhaber: Neff Antriebstechnik Automation GmbH, 71111 Waldenbuch (DE)
(72) Erfinder: Hermann, Martin Dr., 71063 Sindelfingen (DE); Kreutzkämper, Jürgen, 74889 Sinsheim (DE); Branz, Ralf, 71116 Gärtringen (DE)
(74) Vertreter: Rüger, Barthelt & Abel Patentanwälte

(56) Entgegenhaltungen:
- EP-A- 0 845 619
- DE-A1- 3 425 285
- DE-U1- 29 801 280
- JP-A- 9 004 690

## Beschreibung

Die Erfindung betrifft eine Kugelumlaufanordnung, wie insbesondere eine Kugelumlaufgewindespindel.

In der Technik sind eine Vielzahl von Anordnungen bekannt, bei denen zwischen einem Führungskörper und einem an diesem Führungskörper geführten Körper Lagerkugeln angeordnet sind, die in einem geschlossenen Umlauf geführt werden. Grundsätzlich wird dieses Prinzip bei Linearführungen, Bogenführungen oder auch bei Kugelumlaufgewindespindeln angewendet.

Insbesondere bei Kugelumlaufgewindespindeln tritt in der Regel eine Platzbeschränkung auf, die an den Enden der Gewindemuttern die Umlenkung der aus dem Gewinde austretenden Kugeln in einem engen Bogen in die meist gerade ausgebildete Rückführungsbahn erfordert. Entsprechend eng ist auch der Radius des gegenüber liegenden Umlenkbogens, bei dem die Kugeln wieder in das Gewinde eingeführt werden. Außerdem kommt es dabei darauf an, dass die Kugeln möglichst leichtgängig aus dem Gewinde austreten und in die Rückführungsbahn überführt werden. Ebenso leichtgängig sollen die Kugeln wieder in das Gewinde eingeführt werden, um einen ruckfreien, reibungsarmen Betrieb sicher zu stellen.

Aus der DE 198 03 026 A1 ist eine Kugelumlaufgewindespindel bekannt, deren Gewindemutter stirnseitige Abschlussscheiben aufweist. Diese enthalten Umlenkbahnen zur Überführung der Kugeln von der Gewindebahn in die Rückführungsbahn und zurück. In diesem Stand der Technik wird die Krümmung der Umlenkbahn betrachtet. Jedoch wird den Bahnübergängen wenig Beachtung geschenkt.

Aus der US-PS 5063809 ist eine prinzipiell ähnliche Kugelgewindespindel bekannt, bei der die Umlenkung der Kugeln an den Stirnseiten der Gewindemutter durch entsprechende Abschlussscheiben mit eingeformter Bahn bewirkt wird. Die Umlenkbahnen schließen tangential an die Laufbahnen der Kugeln in der Gewindemutter an. Die Bahnprofile der Gewindemutter, der Gewindespindel und der Rückführungsbahn stimmen miteinander überein.

Unter Last ergibt sich eine Verspannung der Gewindemutter gegen die Gewindespindel, die dazu führt, dass die Lagerkugeln beim Eintreten in die Gewindemutter belastet und beim Austreten aus derselben entlastet werden. Es ergibt sich gelegentlich ein unruhiger Lauf.

DE 34 25 285 A1, das den nächstliegenden Stand der Technik represäntiert, offenbart einen Kugelschraubtrieb mit einem Mutterkörper, einer Spindel und einer Anzahl von Kugeln, die in einem Last tragenden schraubenförmigen Kugellaufkanal, zwei stirnseitig an den Mutterkörper angesetzten Umlenkstücken sowie einem im Mutterkörper ausgebildeten Rückführungskanal umlaufen. Jedes Umlenkstück ist als eine Ringscheibe ausgebildet, die schraubenlinienförmig verlaufende Umlenkfinger aufweist, die ein Gewinde bilden und nahezu bis zum Boden in die Gewindenuten der Spindel eingreifen. Während die Umlenkfinger im normalen Betrieb nur die zuvor entlasteten Kugeln aus dem Gewindegang der Spindel herausführen, ohne die Spindel zu berühren, bilden sie bei einem Ausfall des Kugelschraubtriebs z.B. durch Kugehsrerlust ein Hilfsgewinde, das im Störungsfall eine freie axiale Beweglichkeit des Mutterkörpers gegenüber der Spindel verhindert.

DE 298 01 280 U1 offenbart einen Kugelschraubtrieb, bei dem die Laufbahn der Kugeln am Übergang von der Lastlaufbahn in den Umlenkkanal einen tangenten- und krümmungsstetigen, z.B. klothoidenförmigen Verlauf aufweist. Dadurch werden abrupte Änderungen der von den umlaufenden Kugeln erfahrenen Beschleunigung vermieden, wodurch sich die auftretenden Stoß- und Reibkräfte, Schwingungen und Geräusche verringern.

Es ist Aufgabe der Erfindung eine Kugelgewindespindel zu schaffen, die sowohl im Leerlauf als auch unter Last ruhig und gleichmäßig läuft.

Diese Aufgabe wird mit einer Kugelumlaufanordnung nach Anspruch 1 gelöst:

Die erfindungsgemäße Kugelumlaufanordnung, die insbesondere als Kugelumlaufgewindespindel ausgebildet sein kann, weist einen Führungskörper, d.h. z.B. eine Gewindespindel, und einen daran geführten Körper, wie beispielsweise eine Gewindemutter, auf. An den Stirnseiten der Gewindemutter sind Umlenkkörper angeordnet. Die Laufbahnen des Führungskörpers und des geführten Körpers weisen im Querschnitt z.B. ein Spitzbogenprofil auf, so dass jede Kugel hinsichtlich der Lastübertragung die gleichen definierten Verhältnisse vorfindet. Dadurch laufen alle Kugeln in den Laufbahnen auf gut übereinstimmenden Radien der Gewindespindel und der Gewindemutter, was Reibungsverluste minimiert. Die Umlenkbahnen an den Endstücken der Gewindemutter bzw. des sonstigen geführten Körpers weisen jedoch z.B. ein Rundbogenprofil auf. Der Übergang vom Spitzbogenprofil zum Rundbogenprofil ist noch an den Enden des Gewindegangs der Gewindemutter angeordnet. Diese Maßnahme führt zu verbesserten Laufeigenschaften, zu denen ein konstantes Leerlaufdrehmoment, eine verminderte Geräuschemission sowie, ein ruckfreies Ein- und Auslaufen der Kugeln aus dem Gewinde gehören. Die Geometrie lässt sich außerdem komplett maschinell fertigen, was die Exemplarstreuungen gegenüber einer manuellen Glättung von Laufbahnübergängen vermindert. Durch die maschinelle Erzeugung des Rückführungsbahnprofils an dem Eingang und an dem Ausgang des Profils der Gewindemutter, kann eine Übereinstimmung zwischen dem Profil am Ende des Gewindegangs und dem Profil der Rückführungsbahn erreicht werden. Die Kugeln laufen somit leicht und ruckfrei von dem Gewinde in die Rückführungsbahn. Wird hingegen an dem Gewindeanfang und an dem Ende von Hand das vorhandene Spitzbogenprofil etwas ausgeschliffen und somit abgerundet, liegt eine geometrisch undefinierte Übergangszone zwischen dem Lasttragprofil (Spitzbogen) und dem Rückführungsprofil (Kreis) unmittelbar an dem Gewindeeingang und -ausgang. Neben einer hohen Fertigungsstreuung führt dies gelegentlich auch zu unruhigem Lauf. Bei der erfindungsgemäßen Kugelumlaufanordnung ist der geometrisch gut definierte, maschinell erzeugte Profilübergang hingegen in einem, wenn auch geringen, Abstand zur Mutterstirnfläche angeordnet. An Stelle des Spitzbogenprofils für die Laufbahnen und des Rundbogenprofils für die Rückführungsbahn können bedarfsweise auch andere Profile zur Anwendung kommen. Beispielsweise kann die Rückführungsbahn ein elliptisches Profil aufweisen während die Laufbahn ein Rundbogenprofil oder ein abweichendes elliptisches Profil aufweist.

Die Herstellung kann komplett in weichem Zustand vor dem Härten der Mutter erfolgen, was einem Härteverlust vorbeugt, wie er früher beim Handeinschleifen einer harten Mutter auftreten konnte.

Insbesondere die Anordnung des Übergangs zwischen dem Laufbahnprofil der Umlenkbahn bzw. der Rückführungsbahn und dem Laufbahnprofil an der tragenden Laufbahn des geführten Körpers bzw. der Gewindespindel führt zu verbesserten Laufeigenschaften der Kugelumlaufanordnung. Das Beund Entlasten der Kugel findet somit in dem Gewinde der Gewindemutter und der Gewindespindel und nicht erst an den stirnseitigen Enden der Gewindemutter statt.

Das Laufbahnprofil der Gewindespindel stimmt vorzugsweise mit dem Laufbahnprofil der Gewindemutter überein. An den stirnseitigen Enden der Gewindemutter, an denen das Laufbahnprofil zu dem Profil der Umlenkbahn bzw. der Rückführungsbahn wechselt, existiert somit jeweils ein kleines Wegstück, auf dem die Kugel der Gewindebahn weiter folgt, wobei sich lediglich mutternseitig das Laufbahnprofil ändert. Hier findet die Be- und Entlastung der Kugeln statt. Erst nach Entlastung der Kugeln werden diese dann an den Umlenkkörper übergeben. Die Lagerkugeln passieren deshalb jede Trennfuge zwischen dem Umlenkkörper und der Gewindemutter in lastfreiem Zustand.

Ein besonders ruhiger und ruckfreier Lauf sowohl im lastfreien als auch im belasteten Zustand ergibt sich, wenn die an der Übergangsstelle der Bahnprofile rechtsund linksseitig angelegten Tangenten einen Winkel miteinander einschließen, der geringer ist als der Rollreibungswinkel der Lagerkugeln. Dadurch werden ankommende Kugeln regelrecht in die unter Last stehenden Laufbahnen hineingezogen.

Die Umlenkkörper sind so ausgebildet, dass sie die Lagerkugeln auf geradem Weg, d.h. tangential zur Rückführungsbahn, in die Rückführungsbahnen abgeben. Dazu weisen sie einen Fortsatz auf, der wie ein Rohrstück in die Rückführungsbahn hineinragt. Dabei ist dieser relativ kurze Fortsatz an der der Gewindespindel zugewandten Seite offen, so dass die Lagerkugel auf ihrem gesamten Weg von der Laufbahn über die Umlenkbahn bis zu der Rückführungsbahn in einer an der Gewindemutter ausgebildeten Bahn läuft. Mutternseitig ist die Laufbahn somit vollkommen unterbrechungsfrei und fugenlos. Auch dies kommt den Laufeigenschaften der Kugelgewindespindel zugute.

Schließlich ist es vorteilhaft, dafür zu sorgen, dass der Krümmungsradius der Laufbahn, der Umlenkbahn und der Kugelrückführungsbahn an allen Stellen des gesamten Kugelumlaufs größer oder gleich dem Kugeldurchmesser ist. Dies vermeidet Klemmwirkungen auch dann wenn bereits ein gewisser Verschleißfortschritt zu verzeichnen ist.

Bei vorteilhaften Ausführungsformen können die Umlenkkörper aus Keramik oder Hartmetall hergestellt sein. Letztere können im Metallspritzgießverfahren erzeugt werden. Bestehen die Umlenkkörper aus Keramik, können sie ebenfalls in einem Spritzgießverfahren hergestellt werden. Nachdem die Belastung der Lagerkugeln nicht unmittelbar am Anfang des Gewindegangs der Laufbahn sondern erst innerhalb derselben und die Entlastung der Lagerkugeln bereits vor dem Ende derselben erfolgt, treten die Lagerkugeln lastfrei in die Gewindemutter ein und aus. Die Toleranzanforderungen an die Umlenkkörper sind deshalb entschärft, was den Formgebungsprozess für die Umlenkkörper vereinfacht und trotzdem einen ruhigen Lauf ermöglicht.

Weitere Einzelheiten vorteilhafter Ausführungsformen der Erfindung ergeben sich aus Unteransprüchen, aus der Zeichnung oder der zugehörigen Zeichnung.

In der Zeichnung ist ein Ausführungsbeispiel der Erfindung veranschaulicht. Es zeigen:
- Figur 1: eine Kugelumlaufgewindespindel in perspektivischer, teilweise aufgebrochener Darstellung,
- Figur 2: die Gewindemutter der Kugelumlaufgewindespindel nach Figur 1 in perspektivischer, teilweise aufgeschnittener Darstellung und in einem anderen Maßstab,
- Figur 3: die Kugelgewindespindel nach Figur 2 in längs, dabei entlang einer Rückführungsbahn geschnittener, schematisierter Darstellung in einem anderen Maßstab,
- Figur 4: die Laufbahn einer Lagerkugel an einem Ende der Gewindemutter in einer schematisierten Darstellung,
- Figur 5: die Gewindemutter in einer ausschnittsweisen Stirnansicht und
- Figur 6: eine Gegenüberstellung von Laufbahnprofilen der Rückführungsbahn und der Führungsbahn von Gewindespindel und Gewindemutter.

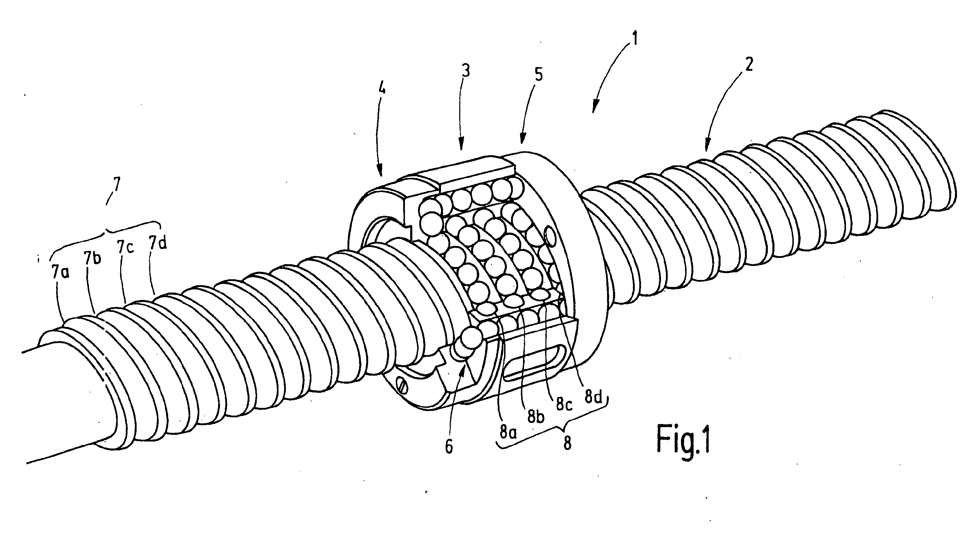

In Figur 1 ist eine Kugelumlaufgewindespindel 1 veranschaulicht, zu der eine Gewindespindel 2 und eine Gewindemutter 3 gehören. Die Gewindemutter 3 ist an ihren beiden stirnseitigen Enden mit ringförmigen Endstücken 4, 5 versehen, die dazu dienen, Kugelumläufe zu schließen. Zwischen die Gewindespindel 2 und die Gewindemutter 3 sind Lagerkugeln 6 eingesetzt, die Wälzkörper zur Lagerung der Gewindemutter 3 an der Gewindespindel 2 bilden. Die Kugelumlaufgewindespindel 1 kann ein-, zwei- oder mehrgängiges Gewinde aufweisen. Entsprechend ist die Gewindemutter 3 mit einem entsprechenden Gewinde gleicher Gangzahl und Steigung versehen. In dem vorliegend veranschaulichten Ausführungsbeispiel ist das Gewinde viergängig. Entsprechend weisen die Gewindespindel 2 und die Gewindemütter 3 jeweils vier zueinander parallele erste Laufbahnen 7 bzw. zweite Laufbahnen 8 (7a, 7b, 7c, 7d; 8a, 8b, 8c, 8d) auf.

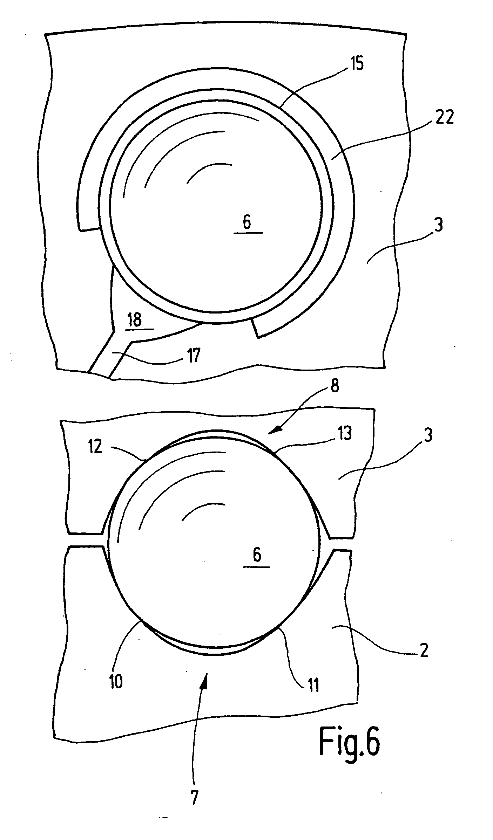

Die Form der Laufbahnen 7, 8 geht insbesondere aus der unteren Hälfte der Figur 6 hervor. Die in der Gewindespindel 2 ausgebildete erste Laufbahn 7 weist im Querschnitt ein Spitzbogenprofil auf. Der Querschnitt wird durch zwei zueinander vorzugsweise spiegelsymmetrisch ausgebildete Bögen 10, 11 begrenzt, deren Radius größer ist als der Durchmesser der Lagerkugeln 6. Die Krümmungsmittelpunkte der beiden Bögen 10, 11 sind so gegeneinander versetzt, dass an dem Boden der von der ersten Laufbahn 7 gebildeten Nut eine Kante oder ein gebogener Bereich mit einem Radius entsteht, der deutlich geringer ist als der Radius der Lagerkugel 6.

Die zweite Laufbahn 8 der Gewindemutter 3 weist ebenfalls ein Spitzbogenprofil auf. Im Querschnitt besteht es aus zwei zueinander symmetrischen Bögen 12, 13, für die das zu den Bögen 10, 11 Gesagte entsprechend gilt.

Damit sind die Anlagepunkte der Lagerkugeln 6 in den Laufbahnen 7, 8 wohl definiert. Je nach Richtung der zu übertragenden Axialkraft liegt die Lagerkugel 6 an den Bögen 11, 12 oder an den Bögen 10, 13 an. Die Anlagestellen sind präzise und für alle Lagerkugeln 6 im Wesentlichen gleich definiert, so dass im Bereich der lasttragenden Laufbahnen 7, 8 ein ruhiger Lauf und geringe Reibung entsteht.

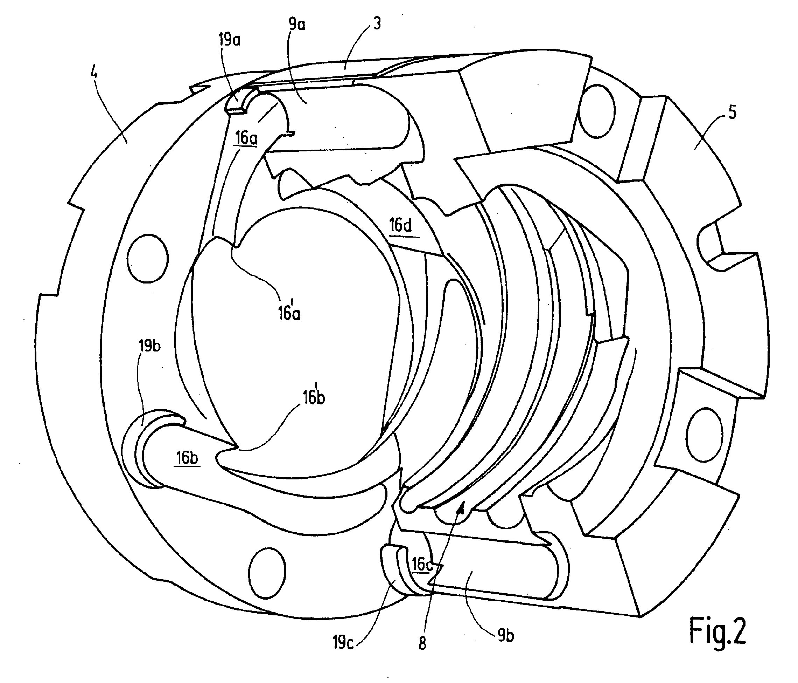

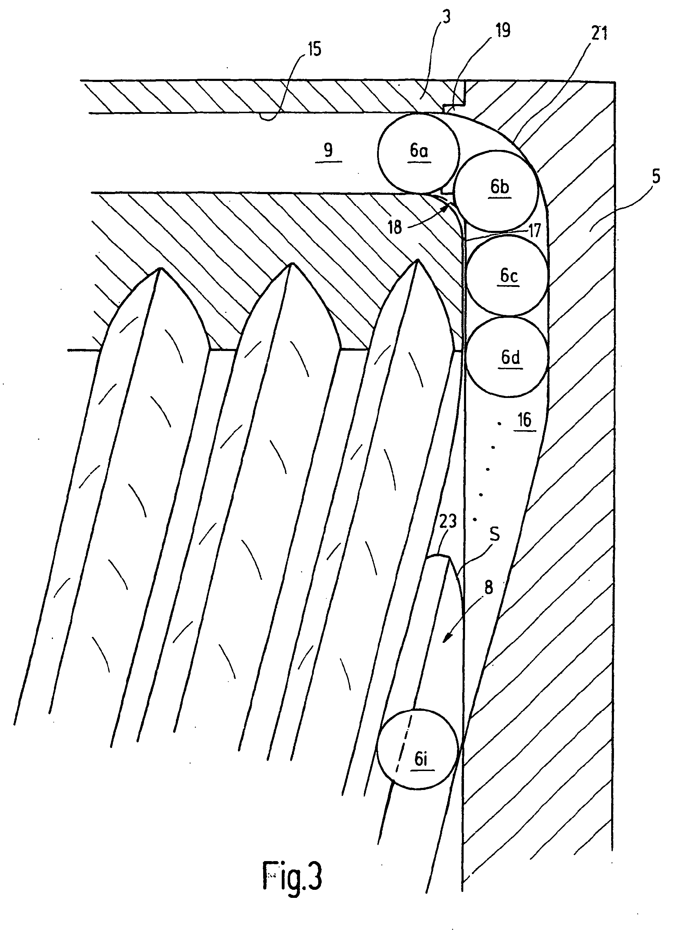

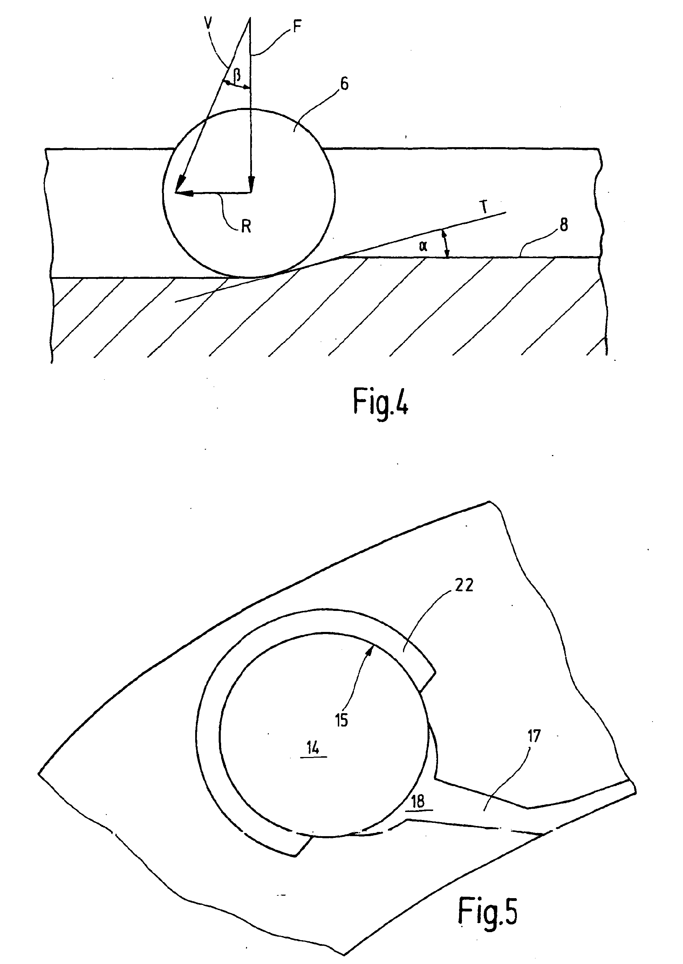

Wie aus den Figuren 2 und 3 hervorgeht, weist die Gewindemutter 3 zu jeder zweiten Laufbahn 8 auch einen Rückführungskanal 9 auf. In Figur 2 sind lediglich zwei Rückführungskanäle 9a, 9b und in Figur 3 lediglich die Rückführungskanal 9a veranschaulicht. Die Rückführungskanäle 9 erstrecken sich vorzugsweise als gerade, zylindrische Bohrungen parallel zu der Mittelachse der ringförmigen Gewindemutter 3 längs durch diese hindurch. Sie weisen, wie die Figuren 5 und 6 (oberer Teil derselben) erkennen lassen, eine zylindrische Wandung 15 auf, die eine Kugelrückführungsbahn 14 bildet. Der Durchmesser derselben ist vorzugsweise etwa 1/10 bis 3/10 Millimeter größer als der Durchmesser einer Lagerkugel 6.

Die Endstücke 4, 5 sind zueinander vorzugsweise gleich, d.h. miteinander identisch ausgebildet. Sie weisen für jeden in Vorderansicht der Gewindemutter 3 an den Ecken eines Quadrats angeordneten Rückführungskanal 9 eine Umlenkbahn 16 auf. Sie schließen, wie Figur 2 erkennen lässt, etwa tangential an die stirnseitig auslaufenden zweiten Laufbahnen 8 der Gewindemutter 3 an. Die Umlenkbahnen 16 werden seitens der Endstücke 4, 5 durch diese begrenzt. Die Umlenkbahnen 16 sind dabei als Rinnen mit kreisbogenförmig gekrümmter Wandung ausgebildet. An der den Endstücken 4, 5 gegenüber liegenden Seite begrenzt die Spindelmutter 3 die Umlenkbahnen. Wie Figur 3 veranschaulicht, sind dazu an den Stirnseiten der Spindelmutter 3 Laufrinnen 17 ausgebildet, die von dem stirnseitigen Ausgang der zweiten Laufbahn 8 in stufen- und knickfreier Krümmung zu der Kugelrückführungsbahn 14 führt. Eine solche Laufrinne 17 ist auch aus den Figuren 5 und 6 (obere Hälfte derselben) ersichtlich. Die Laufrinnen 17 schließen mit den Umlenkbahnen 16 einen Kreisquerschnitt ab.

Die Umlenkbahn 16 schließt in gerader Verlängerung an die zweite Laufbahn 8 an (siehe Figur 3) und schwenkt dann in einem geringfügigen Bogen in eine Umfangsrichtung ein, wie dies insbesondere in Figur 2 anhand der Umlenkbahn 16b erkennbar ist. Figur 2 veranschaulicht auch an den Eingängen der Umlenkbahnen 16 angeformte Fortsätze 16' (16'a, ...), die in die Spitze des Spitzbogenprofils der Gewindespindel 2 greifen und zum Herausheben der Lagerkugeln 6 aus der Gewindespindel 2 dienen. Eine weitere Darstellung gibt Figur 3. Figur 3 ist insoweit schematisiert als die Schnittführung hier radial von innen nach außen aus der Radialrichtung kommend der Umlenkbahn 16 folgend in die Umfangsrichtung einschwenkt, um sich ab Mitte der Kugelrückführungsbahn 9 wieder in Radialrichtung fortzusetzen.

Der Übergang von der Umlenkbahn 16 in die Rückführungsbahn 9 ist seitens der Laufrinne 17 abgerundet. Die Laufrinne 17 schwenkt in einem Bogen in die Kugelrückführungsbahn 9 ein. In diesem Schwenkbereich 18 (Figur 5) verbreitert sich die Laufrinne 17 um einen stufen- und knickfreien Übergang zu ermöglichen. Das Endstück 4, 5 weist an dem Eingang der Kugelrückführungsbahn 9 einen Fortsatz 19 auf (19a, 19b, 19c), wie er insbesondere aus Figur 2 ersichtlich ist. Dieser Fortsatz ist nach Art eines rohrförmigen Ansatzes ausgebildet, der jedoch an seiner dem Bereich 18 zugewandten Seite eine Ausnehmung aufweist. Der Ansatz 19 erstreckt sich in gerader Verlängerung eines viertelkreisförmigen Umlenkbogens 21 in eine c-förmige Ausnehmung 22 (Figur 5) an dem Ein- oder Austritt des Rückführungskanals 9. Er bildet somit den Übergang der Kurvenbahn in die gerade Strecke an der Außenseite der von der Kugel 6 zu durchlaufenden Kurve. Die Unterbrechung des Fortsatzes 19 an der dem Bereich 18 zugewandten Seite ermöglicht dabei, dass die Kugel an dem Körper der Gewindemutter 3 entlang läuft, ohne dabei eine Trennfuge überqueren zu müssen. Die Umlenkbahn 16 weist wie die Kugelrückführungsbahn 14 einen kreisförmigen Querschnitt auf.

Der Übergang von dem Spitzbogenquerschnitt der zweiten Laufbahn 8 zu dem Kreisquerschnitt der Umlenkbahn 16 findet an einer Übergangsstelle 23 im letzten Stück der gewindeförmigen zweiten Laufbahn 8 vor dem stirnseitigen Austritt aus der Gewindemutter 3 statt. Die Übergangsstelle 23 ist durch eine Linie oder Kante markiert. Figur 4 veranschaulicht dies. Weiter veranschaulicht Figur 3 die Ausbildung der Übergangsstelle 13 etwa senkrecht zu der zweiten Laufbahn 8 gesehen. Die Übergangsstelle 23 wird durch eine ungefähr v-förmig gebogene Kante gebildet, wobei sich das "V" zu der zweiten Laufbahn hin öffnet und mit seiner Spitze zu der Rückführungsbahn weist. Seine Schenkel sind bogenförmig gekrümmt. Die Bögen sind zu der Rückführungsbahn hin konvex. Bei einer möglichen Ausführungsform sind beide Schenkel der an der Übergangsstelle 23 antreffenden Kante symmetrisch zueinander angeordnet. Sie können jedoch auch, wie in Figur 3 dargestellt, asymmetrisch ausgebildet sein. Eine Tangente T die beispielsweise an der Stelle S (Figur 3) an im Querschnitt kreisbogenförmigen Auslaufbereich der zweiten Laufbahn 8 angelegt wird, schließt mit der zweiten Laufbahn 8 einen sehr spitzen Winkel α ein. Der Übergang an der kantenförmigen Übergangsstelle 23 ist dabei an jeder denkbaren Stelle S so bemessen, dass der Winkel α kleiner als ein Rollreibungswinkel β der Lagerkugel 6 ist. Der Rollreibungswinkel β ist der Winkel zwischen dem Rollreibungsvektor V und einer auf die Lagerkugel 6 einwirkenden Kraft F. Der Rollreibungsvektor V ergibt sich durch vektorielle Addition F mit der Rollreibungskraft R.

Die Gewindemutter 3 besteht üblicherweise aus gehärtetem Stahl. Die endgültige Geometrie der zweiten Laufbahn 8 wird nach dem Härten der Gewindemutter in diese eingebracht. Vor dem Härten der Gewindemutter wird an dem Anfang und dem Ende der zweiten Laufbahn der Gewindemutter das kreisbogenförmige Bahnprofil eingebracht, wodurch die Übergangsstelle 23 vorbereitet wird. Die Übergangsstelle 23 und das sich anschließende Rundbogenprofil werden nach dem Härten der Mutter nicht mehr nachgearbeitet. Mit dem Einschleifen der zweiten Laufbahn 8 ist die Übergangsstelle 23 geometrisch streng definiert gefertigt. Die Endstücke 4, 5 werden vorzugsweise aus einer technischen Keramik, aus gehärtetem Stahl oder aus Hartmetall z.B. in einem Hartmetallspritzgussverfahren ausgebildet. Die Formgebung kann aufgrund des übersichtlichen Aufbaus vollständig maschinell in hoher Präzision erfolgen. Dies ermöglicht ein kostengünstiges Fertigungsverfahren für die Endstücke 4, 5 und eine Serienfertigung in großen Stückzahlen. Die übersichtliche Geometrie und die Umlenkung der Kugeln 6 auf ihrem Weg von den zweiten Laufbahnen 8 über die Umlenkungsbahn 16 in die Kugelrückführungsbahn 14 erfolgt in ständigem Kontakt der Kugeln 6 mit der Gewindemutter 3 ohne Überquerung einer Trennfuge soweit die Kugel 6 mit der Gewindemutter 3 in Berührung steht. Dies ermöglicht wiederum einen laufruhigen Betrieb auch wenn die Endstücke 4, 5 eine gewisse Fertigungstoleranz aufweisen. Die Fortsätze 19 gestatten überdies eine besonders einfache Montage weil sie eine Zentrierung der Endstücke 4, 5 an der Gewindemutter 3 vornehmen. Fehlmontagen infolge von Fehljustagen sind deshalb kaum zu befürchten. Durch die Zentrierwirkung der Fortsätze 19 wird ein idealer Passsitz zwischen den Endstücken 4, 5 und der Gewindemutter 3 erreicht, was wiederum dem ruhigen Lauf zugute kommt.

Die insoweit beschriebene Kugelumlaufgewindespindel 1 arbeitet wie folgt:

In Betrieb sind die Endstücke 4, 5 und die Gewindemutter 3, wie Figur 1 veranschaulicht, vollständig mit Lagerkugeln 6 gefüllt. Benachbarte Lagerkugeln 6 liegen mit geringem Spiel aneinander an. Die Endstücke 4, 5 sind durch Schrauben oder andere Verbindungsmittel mit der Gewindemutter 3 verbunden. Werden die Gewindemutter 3 und die Gewindespindel 2 relativ zueinander verdreht wälzen die Lagerkugeln 6 in den ersten und zweiten Laufbahnen 7, 8 ab. Sie drängen dabei an einer Stirnseite der Gewindemutter 3 heraus und schieben ihre Vorläuferkugeln vor sich her in die Umlenkbahn 16 ein. Beim Übergang über die Übergangsstelle 23 werden die Lagerkugeln 6 jeweils entlastet. Während die Lagerkugel 6i in Figur 3 noch Last trägt sind die Lagerkugeln 6a bis 6d entlastet. In tangentialem Anschluss an den durch die Laufbahn 8 gebildeten Gewindegang treten die zweite Lagerkugeln 6 somit in die Umlenkbahn 16 und rollen an der Stirnseite der Gewindemutter 3, d.h. genau genommen in der Laufrinne 17 entlang zu dem Bereich 18. Hier werden sie über den Umlenkbogen 21 der Umlenkbahn 16 in die Richtung der Kugelrückführungsbahn 14 umgelenkt. An den Umlenkbogen 21 schließt sich mit dem Fortsatz 19 ein kurzes Stück einer geraden Bahn an, so dass die Kugel 6a bereits auf gerader Bahn ist wenn sie den geraden Kugelrückführungskanal 9 betritt. In dem Rückführungskanal 14 werden die Kugeln fortwährend durch die nachdrängenden Kugeln fortbewegt bis sie auf der gegenüber liegenden Seite in dem in Figur 3 nicht veranschaulichten Endstück 4 auf umgekehrtem Wege wieder in die zweite Laufbahn 8 eingeführt werden. Hier treten die Kugeln zunächst lastfrei ein, wobei sie an der Übergangsstelle 23 dann bereits im Gewindegang befindlich wieder unter Last gesetzt werden. Der Knick, den die Übergangsstelle 23 bildet, ist dabei so gering, dass die Lagerkugeln 6 willig in den lasttragenden Bereich der zweite Laufbahn 8 einlaufen. Dies wird durch das oben diskutierte Winkelverhältnis zwischen α und β sichergestellt.

Die vorgestellte Geometrie für die erste und zweite Laufbahn 7, 8, die Umlenkbahn 16 und die Kugelrückführungsbahn 14 sind optimiert. Es ergeben sich verminderte Impulskräfte auf die Endstücke 4, 5. Es sind im Vergleich zu herkömmlichen Kugelumlaufgewindespindeln höhere Drehzahlen möglich. Die Endstücke 4, 5 und die Endbereiche der zweiten Laufbahnen 8 in der Gewindemutter 3 bilden identische Kugellaufbahnen mit gleich bleibendem Querschnitt aus, so dass die Kugel auf der gesamten Bahn mit gleich bleibender Toleranz geführt wird. Es ergibt sich ein ruhiger Lauf. Unter "ruhigem Lauf" wird insbesondere ein geräuscharmer Lauf, ein Lauf(Betrieb) mit konstantem Leerlaufmoment sowie ein Lauf ohne Knack- oder Poltergeräusche verstanden.

Bei einer optimierten Kugelumlaufgewindespindel ist ein spezielles Laufbahnprofil vorgesehen, das von dem Profil der Kugelumlenkbahn 16 und der Kugelrückführungsbahn 14 abweicht. Der Übergang zwischen beiden Profilen findet jeweils nahe der stirnseitigen Enden der Gewindemutter 3 innerhalb ihrer Gewindegänge statt. Dies ergibt eine hohe Laufruhe mit und ohne Last sowie bei hohen und bei niedrigen Drehzahlen.

## Patentansprüche

1. Kugelumlaufanordnung, insbesondere Kugelumlaufgewindespindel (1),
mit einem Führungskörper (2), der wenigstens eine erste Laufbahn (7) für Lagerkugeln (6) aufweist, wobei die erste Laufbahn (7) ein Tragprofil aufweist,
mit einem geführten Körper (3), der zwei Stirnflächen und wenigstens eine zweite Laufbahn (8) für die Lagerkugeln (6) aufweist, wobei jeder zweiten Laufbahn (8) ein Kugelrückführungskanal (9) zugeordnet ist und wobei das Profil der zweiten Laufbahn (8) an den Enden der zweiten Laufbahn (8) jeweils an einer Stelle in ein davon abweichendes Rückführungsbahnprofil übergeht, die von der jeweiligen Stirnfläche des geführten Körpers (3) beabstandet sind,
mit Umlenkkörpern (4, 5), die jeweils wenigstens eine Umlenkbahn (16) aufweisen, um jede zweite Laufbahn (8) mit jeweils einem Kugelrückführungskanal (9) zu verbinden und die an die Stirnflächen angesetzt sind,
**dadurch gekennzeichnet, dass** der Umlenkkörper (4, 5) einen Fortsatz (19) aufweist, der sich in einen die Rückführungsbahn (14) enthaltenden Kugelrückführungskanal (9) des Körpers (3) hinein erstreckt und der schalenförmig ausgebildet ist, wobei der Fortsatz (19) lediglich an die Außenseite der Umlenkbahn (16) anschließt.

2. Kugelumlaufanordnung nach Anspruch 1, **dadurch gekennzeichnet, dass** die Umlenkkörper (4, 5) aus einem keramischen Material ausgebildet sind.

3. Kugelumlaufanordnung nach Anspruch 1, **dadurch gekennzeichnet, dass** die Umlenkkörper (4, 5) aus einem Hartmetall ausgebildet sind.

4. Kugelumlaufanordnung nach Anspruch 1, 2 oder 3, **dadurch gekennzeichnet, dass** die Umlenkkörper (4, 5) in einem Spritzgussverfahren hergestellt sind.

5. Kugelumlaufanordnung nach Anspruch 1, **dadurch gekennzeichnet, dass** der Führungskörper (2) eine Gewindespindel ist, deren erste Laufbahn (7) ein Außengewinde bildet, und dass der geführte Körper (3) eine Kugelumlaufmutter ist, deren zweite Laufbahn (8) ein zu dem Außengewinde passendes Innengewinde ist.

6. Kugelumlaufanordnung nach Anspruch 1, **dadurch gekennzeichnet, dass** das Tragprofil der zweiter Laufbahn (8) des geführten Körpers (3) ein Spitzbogenprofil ist.

7. Kugelumlaufanordnung nach Anspruch 1, **dadurch gekennzeichnet, dass** das Rückführungsbahnprofil ein Kreisbogenprofil ist.

8. Kugelumlaufanordnung nach Anspruch 1, **dadurch gekennzeichnet, dass** der Übergang (23) zwischen dem Tragprofil und dem Rückführungsprofil an den Enden der zweiten Laufbahn (8) in einem Bereich konstanter Bahnkrümmung angeordnet ist, wobei sich mit bezogen auf die Gewindeachse radialer Blickrichtung ein tangentialer, also knickfreier, Übergang zwischen den beiden Bahnprofilen ergibt.

9. Kugelumlaufanordnung nach Anspruch 1, **dadurch gekennzeichnet, dass** die an der Übergangsstelle (23) der Bahnprofile rechts- und linksseitig angelegten Tangenten T einen Winkel α miteinander einschießen, der geringer ist als Rollreibungswinkel β der Lagerkugeln (6).

10. Kugelumlaufanordnung nach Anspruch 1, **dadurch gekennzeichnet, dass** der Kugelrückführungskanal (9) durch den geführten Körper (3) führt, der einstückig ausgebildet ist.

11. Kugelumlaufanordnung nach Anspruch 1, **dadurch gekennzeichnet, dass** an dem geführten Körper (3) zwischen dem Kugelrückführungskanal (9) und der zweiten Laufbahn (8) eine unterbrechungsfreie Laufrinne (17) ausgebildet ist, die im Querschnitt ein Kreisbogenprofil aufweist.

12. Kugelumlaufanordnung nach Anspruch 11, **dadurch gekennzeichnet, dass** sich das Kreisbogenprofil mit dem Profil der Umlenkbahn (16) zu einem Vollkreis ergänzt.

13. Kugelumlaufanordnung nach Anspruch 13, **dadurch gekennzeichnet, dass** der umlenkkörper (4, 5) wenigstens einen Fortsatz (19a, 19b, 19c) aufweist, mit dem der jeweilige Umlenkkörper (4, 5) an dem geführten Körper (3) bezüglich der Rückführungsbahn (14) zentriert ist.

14. Kugelumlaufanordnung nach Anspruch 1, **dadurch gekennzeichnet, dass** der Krümmungsradius der zweiter Laufbahn (8), der Umlenkbahn (16) und Kugelrückführungsbahn (14) an allen Stellen des gesamten Umlaufs größer oder gleich dem Kugeldurchmesser ist.

## Claims

1. A ball-race arrangement, especially a threaded ball-race spindle (1),
with a guiding element (2), which provides at least one first race (7) for ball bearings (6), wherein the first race (7) provides a bearing profile,
with a guided element (3), which provides two end faces and at least one second race (8) for ball bearings, wherein a ball-return channel (9) is allocated to each second race (8), and wherein the profile of the second race (8) merges at the end of the second race (8) at one position in each case into a return-track profile differing from it, which are disposed at a spacing distance from the respective end face of the guided element (3),
with deflection elements (4, 5), which each provide at least one deflection track (16), in order to connect each second race (8) to at least one ball-return channel (9), and which are positioned in contact with the end faces,
**characterised in that**
the deflection element (4, 5) provides a projection (19), which extends into a ball-return channel (9) of the element (3) containing the return track (14) and which is formed in a dish-shape, wherein the projection (19) adjoins only the external side of the deflection track (16).

2. The ball-race arrangement according to claim 1,
**characterised in that**
the deflection elements (4, 5) are formed from a ceramic material.

3. The ball-race arrangement according to claim 1,
**characterised in that**
the deflection elements (4, 5) are formed from a hard metal.

4. The ball-race arrangement according to claim 1, 2 or 3,
**characterised in that**
the deflection elements (4, 5) are manufactured using an injection-moulding method.

5. The ball-race arrangement according to claim 1,
**characterised in that**
the guiding element (2) is a threaded spindle, of which the first race (7) forms an external thread, and that the guided element (3) is a ball-race nut, of which the second race (8) is an internal thread matching the external thread.

6. The ball-race arrangement according to claim 1,
**characterised in that**
the bearing profile of the second race (8) of the guided element (3) is a pointed-arch profile.

7. The ball-race arrangement according to claim 1,
**characterised in that**
the return-track profile is a circular-arch profile.

8. The ball-race arrangement according to claim 1,
**characterised in that**
the transition (23) between the bearing profile and the return profile is arranged at the end of the second race within a region of constant track curvature, wherein a tangential, that is to say, kink-free, transition is provided between the two track profiles with a radial viewing angle relative to the axis of the thread.

9. The ball-race arrangement according to claim 1,
**characterised in that**
the tangents T plotted at the transition (23) of the track profiles on the right and left side enclose with one another an angle α, which is smaller than the rolling-friction angle β of the ball bearings (6).

10. The ball-race arrangement according to claim 1,
**characterised in that**
the ball return channel (9) leads through the guided element (3), which is formed in one piece.

11. The ball-race arrangement according to claim 1,
**characterised in that**
an uninterrupted running groove (17), which provides a circular-arch profile in cross-section, is formed between the ball-return channel (9) and the second race (8).

12. The ball-race arrangement according to claim 11,
**characterised in that**
the circular-arch profile is completed with the profile of the deflection track (16) to form a full circle.

13. The ball-race arrangement according to claim 12,
**characterised in that**
the deflection element (4, 5) provides at least one projection (19a, 19b, 19c), with which the respective deflection element (4, 5) is centred on the guided element (3) with reference to the return track (14).

14. The ball-race arrangement according to claim 1,
**characterised in that**
the radius of curvature of the second race (8), of the deflection track (16) and ball-return track (14) is greater than or equal to the diameter of the ball at all positions of the race as a whole.

## Revendications

1. Agencement à recirculation de billes, en particulier vis filetée à recirculation de billes (1), comprenant un corps de guidage (2) qui comporte au moins un premier chemin de roulement (7) pour des billes de roulement (6), le premier chemin de roulement (7) présentant un profil porteur, comprenant un corps guidé (3) qui comporte deux faces frontales et au moins un second chemin de roulement (8) pour les billes de roulement, à chaque second chemin de roulement (8) étant associé un canal de retour de billes (9), et le profil du second chemin de roulement (8) aux extrémités du second chemin de roulement (8) éloignées de la face frontale considérée du corps guidé (3), se prolongeant chaque fois en un point par un profil de chemin de retour qui lui est différent, comprenant des corps de déviation (4, 5) qui comportent chacun au moins un chemin de déviation (16) pour relier chaque second chemin de roulement (8) à un canal de retour de billes (9) et qui sont rapportés sur les faces frontales, **caractérisé en ce que** le corps de déviation (4, 5) comporte un talon (19) qui s'étend à l'intérieur d'un canal de retour de billes (9) du corps (3) contenant le profil de chemin de retour (14) et qui est conformé en coque, le talon (19) se raccordant uniquement au côté extérieur du chemin de déviation (16).

2. Agencement à recirculation de billes selon la revendication 1, **caractérisé en ce que** les corps de déviation (4, 5) sont réalisés dans un matériau céramique.

3. Agencement à recirculation de billes selon la revendication 1, **caractérisé en ce que** les corps de déviation (4, 5) sont réalisés dans un métal dur.

4. Agencement à recirculation de billes selon la revendication 1, 2 ou 3, **caractérisé en ce que** les corps de déviation (4, 5) sont fabriqués par procédé de moulage par injection.

5. Agencement à recirculation de billes selon la revendication 1, **caractérisé en ce que** le corps de guidage (2) est une vis filetée dont le premier chemin de roulement (7) forme un filetage extérieur, et **en ce que** le corps guidé (3) est un écrou à recirculation de billes dont le second chemin de roulement (8) est un filetage intérieur adapté au filetage extérieur.

6. Agencement à recirculation de billes selon la revendication 1, **caractérisé en ce que** le profil porteur du second chemin de roulement (8) du corps guidé (3) est un profil en arc brisé.

7. Agencement à recirculation de billes selon la revendication 1, **caractérisé en ce que** le profil de chemin de retour est un profil en arc de cercle.

8. Agencement à recirculation de billes selon la revendication 1, **caractérisé en ce que** la transition (23) entre le profil porteur et le profil de retour aux extrémités du second chemin de roulement (8) se trouve dans une zone à courbure de chemin constante, ce qui, vu dans la direction radiale par rapport à l'axe de filetage, crée une transition tangentielle, donc sans brisure, entre les deux profils de chemins.

9. Agencement à recirculation de billes selon la revendication 1, **caractérisé en ce que** les tangentes T appliquées à droite et à gauche au point de transition (23) des profils de chemins forment entre elles un angle α qui est inférieur à l'angle de frottement de roulement β des billes de roulement (6).

10. Agencement à recirculation de billes selon la revendication 1, **caractérisé en ce que** le canal de retour de billes (9) traverse le corps guidé (3), lequel est conçu d'une seule pièce.

11. Agencement à recirculation de billes selon la revendication 1, **caractérisé en ce qu'**une rainure de roulement ininterrompue (17) présentant en coupe transversale un profil en arc de cercle est ménagée dans le corps guidé (3) entre le canal de retour de billes (9) et le second chemin de roulement (8).

12. Agencement à recirculation de billes selon la revendication 11, **caractérisé en ce que** le profil en arc de cercle se complète avec le profil du chemin de déviation (16) pour former un cercle entier.

13. Agencement à recirculation de billes selon la revendication 13, **caractérisé en ce que** le corps de déviation (4, 5) comporte au moins un talon (19a, 19b, 19c) qui permet de centrer le corps de déviation correspondant (4, 5) sur le corps guidé (3) par rapport au chemin de retour (14).

14. Agencement à recirculation de billes selon la revendication 1, **caractérisé en ce que**, en tous points de la périphérie totale, le rayon de courbure du second chemin de roulement (8), le chemin de déviation (16) et le chemin de retour de billes (14) sont supérieurs ou égaux au diamètre des billes.
